# EUROPEAN PATENT APPLICATION

(11) **EP 2 757 443 A1**
(43) Date of publication of application: **23.07.2014**
(21) Application number: 13157048.3
(22) Date of filing: 27.02.2013
(51) Int. Cl.: G06F 3/041, G02F 1/1335, G06F 3/044

(54) **Touch-sensitive panel**

(30) Priority: 22.01.2013 CN 201310023174
(71) Applicant: Wintek (China) Technology Ltd., Dongguan City 523000 (CN); Wintek Corporation, 42760 Taichung City (TW)
(72) Inventor: Lin, Su-Ming, 427 Taichung City (TW); Huang, Shin-Chieh, 404 Taichung City (TW); Chen, Chia-Chi, 411 Taichung City (TW); Tsai, Yi-Chen, 436 Taichung City (TW); Yu, Peng-Chih, 880 Penghu County (TW); Huang, Ping-Wen, 406 Taichung City (TW); Lien, Chih-Hsien, 420 Taichung City (TW)
(74) Representative: Von Kreisler Selting Werner - Partnerschaft von Patentanwälten und Rechtsanwälten mbB

(57) **Abstract**

A touch-sensitive panel including a substrate, a plurality of sensing electrodes and a decoration layer is disclosed. The substrate has a touch-sensitive region and a decoration region arranged at the peripheral of the touch-sensitive region. A portion of the decoration region is a semi-transparent region. The sensing electrodes are disposed on the touch-sensitive region. The decoration layer is disposed on the decoration region. The decoration layer has a meshed pattern in the semi-transparent region. The meshed pattern has a plurality of openings. The side wall of each opening tilts to an angle with respect to a normal line perpendicular to a surface of the substrate to regulate the light transmittance of the light entering the semi-transparent region.

## Description

This application claims the benefit of People's Republic of China application Serial No. 201310023174.5, filed January 22, 2013.

### BACKGROUND OF THE INVENTION

### Field of the Invention

The invention relates in general to a touch-sensitive panel, and more particularly to a touch-sensitive panel which achieves semi-transparent visual effect or gradient effect through the meshed pattern in the semi-transparent region.

### Description of the Related Art

The touch-sensitive panel has gained a considerable market share in the market of consumer electronic products since the technology of touch-sensitive panel was developed. Currently, touch display panels integrating the functions of touch control and display are widely used in portable electronic products such as wireless communication mobile phones, notebook computers, tablet computers and digital cameras.

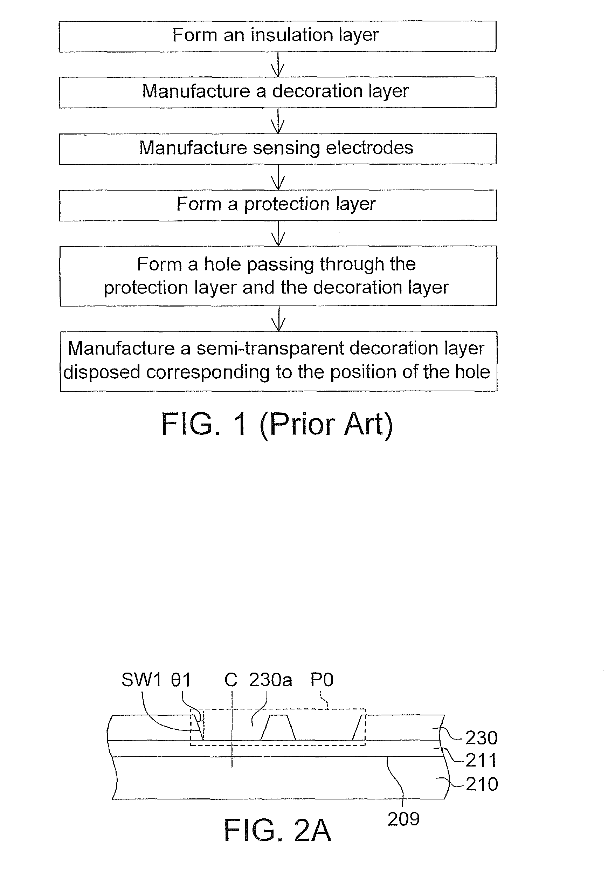

Referring to FIG. 1, a flowchart of forming a semi-transparent region in a decoration layer of a non-display region of a conventional touch-sensitive panel is shown. The conventional touch-sensitive panel is manufactured according to the following steps. First, an insulation layer made of silicon dioxide is formed on a substrate. Next, a decoration layer on the non-display region is manufactured. Then, sensing electrodes interlaced to each other are formed for sensing a coordinate position corresponding to a touch signal. Then, a protection layer made of silicon dioxide is formed on the sensing electrodes and the decoration layer. Then, a hole passing through the protection layer and the decoration layer is formed to expose a transparent region. Lastly, a semi-transparent decoration layer is manufactured correspondingly on the position of the hole to form a semi-transparent region. However, the conventional method requires performing the ink printing process twice, not only increasing extra steps in the manufacturing process but also incurring more manufacturing cost for the printing screens. Besides, the light transmittance of the conventional semi-transparent decoration layer is regulated by adding a transparent ink to an ordinary ink, the parameters and printing uniformity of the transparent ink must be accurately adjusted otherwise the printing quality of the semi-transparent decoration layer in printing process every time cannot be consistent.

### SUMMARY OF THE INVENTION

The invention is directed to a touch-sensitive panel which achieves semi-transparent visual effect or color-gradient effect through the meshed pattern in the semi-transparent region. The light transmittance of the light entering or emitted from the semi-transparent region can be regulated by adjusting the opening area of the meshed pattern through the arrangment of a regular geometric pattern or an irregular pattern.

According to an embodiment of the present invention, a touch-sensitive panel including a substrate, a plurality of sensing electrodes and a first decoration layer is disclosed. The substrate has a touch-sensitive region and a decoration region arranged at the peripheral of the touch-sensitive region. A portion of the decoration region is a semi-transparent region. The sensing electrodes are disposed on the touch-sensitive region. The first decoration layer is disposed on the decoration region. The first decoration layer has a meshed pattern in the semi-transparent region. The meshed pattern has a plurality of openings. The side wall of each opening tilts with respect to a normal line perpendicular to a surface of the substrate to regulate the light transmittance of the light entering the semi-transparent region.

The above and other aspects of the invention will become better understood with regard to the following detailed description of the preferred but non-limiting embodiments. The following description is made with reference to the accompanying drawings.

### BRIEF DESCRIPTION OF THE DRAWINGS

FIG. 1 shows a flowchart of forming a semi-transparent region in a decoration layer of a non-display region of a conventional touch-sensitive panel;

FIGS. 2A∼2C are processes of forming a semi-transparent region in a decoration region according to an embodiment;

FIG. 2D shows a schematic diagram of a decoration region according to an another embodiment;

FIGS. 3A and 3B show a schematic diagram of a decoration region according to another two embodiments;

FIGS. 4A and 4B are a comparison of the influence on the incident light and the outgoing light when the opening size is different;

FIG. 5 shows a schematic diagram of a touch-sensitive panel having a semi-transparent region in the decoration region according to an embodiment of the invention;

FIG. 6A shows a cross-sectional view of a touch-sensitive panel according to an embodiment of the invention;

FIG. 6B shows a cross-sectional view of a touch-sensitive panel according to an embodiment of the invention;

FIG. 6C shows a cross-sectional view of a touch-sensitive panel according to an embodiment of the invention;

FIG. 7A shows a top view of a touch sensing element disposed on the touch-sensitive region according to FIG. 5;

FIG. 7B shows a cross-sectional view of a touch sensing element along a cross-sectional line A-A' according to FIG. 7A;

FIGS. 8∼10 are three variations of the touch sensing element according to FIG. 7A and FIG. 7B;

FIG. 11A shows a top view of a touch sensing element disposed on the touch-sensitive region according to FIG. 5;

FIG. 11B shows a cross-sectional view of a touch sensing element along a cross-sectional line A-A' according to FIG. 11A;

FIG. 12 shows a variation of a touch sensing element of a touch panel according to FIG. 11A and FIG. 11B;

FIGS. 13 and 14 are two embodiments of sensing electrodes being realized by single-layered electrodes;

FIGS. 15A∼15E are various embodiments of touch sensing elements.

### DETAILED DESCRIPTION OF THE INVENTION

Referring to FIG. 2A∼2C, processes of forming a semi-transparent region P0 in a decoration region according to an embodiment are shown. First, as indicated in FIG. 2A, an insulating layer 211 made of exemplified silicon dioxide, for example, can be selectively formed on the substrate 210, and a decoration layer 230 can be selectively formed on the substrate 210 or on the insulating layer 211. In the present step, the decoration layer 230 may be formed by coating, and a plurality of openings 230a may be formed in the semi-transparent region P0 by wet etching (exposure and development) or dry etching (laser etching), for example. The aperture of each of the openings 230a of the decoration layer 230 can be selectively less than or larger than 120 µm. In an embodiment, when the aperture of each of the openings 230a is smaller than 120 µm or is smaller than the resolution recognizable to the human eyes, the human eyes can hardly detect the existence of the openings 230a, so the visual reaction of human eyes will not be affected. When the aperture of each of the openings 230a is larger than 120um or larger than the resolution recognizable to the human eyes, the human eyes will detect the existence of the openings 230a, so the openings 230a can be formed in a functional pattern (such as a home key or a return key) or in a trademark pattern for increasing the visual reaction of human eyes with respect to the pattern.

In an embodiment, the side wall SW1 of each opening 230a of the decoration layer 230 tilts to an angle θ1 with respect to a normal line C perpendicular to a surface 209 of the substrate. Exemplarily but not restrictively, the angle θ1 is between 2∼40 degrees.

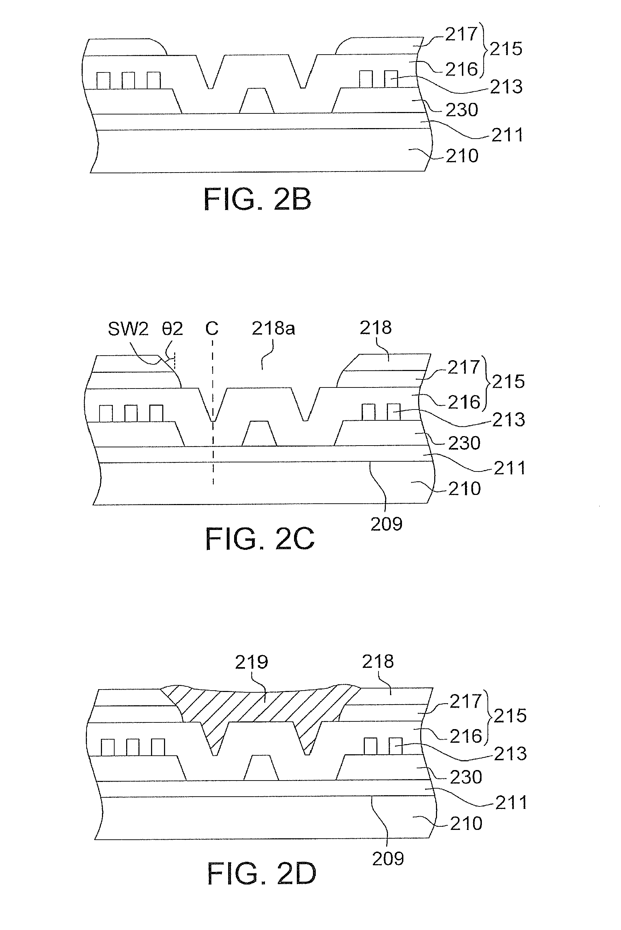

Next, as indicated in FIG. 2B, a plurality of wires 213 are arranged on the decoration layer 230, and a protection layer 215 covers the wires 213 and the decoration layer 230 as well as the semi-transparent region P0. The protection layer 215 can be selectively formed by the buffer layer 216 and the planarizing layer 217 which are formed by silicon dioxide, silicon nitride, an organic insulating material or an inorganic insulating material. Furthermore, the buffer layer 216 can be selectively made of silicon dioxide (Si02) or silicon nitride (SiNx), or a multi-layered structure formed by stacking silicon dioxide and silicon nitride materials. However, any materials capable of providing the same function like the materials disclosed above are also within the scope of protection of the invention. In addition, the buffer layer 216 covers the opening 203a in the semi-transparent region P0. Moreover, the buffer layer 216 can be omitted in the above embodiment of the invention to simplify manufacturing process and increase the yield rate. The planarizing layer 217 may be made of an organic insulating material or an inorganic insulating material. Selectively, the planarizing layer 217 does not cover the opening 203a but exposes a portion of the buffer layer 216 corresponding to the semi-transparent region P0 to avoid the light transmittance of the opening 203a deteriorating.

Then, as indicated in FIG. 2C, another the decoration layer 218 is formed on the protection layer 215 and a portion of the decoration region (such as LOGO region) not illustrated in the diagram. The side wall SW2 of opening 218a of the topmost decoration layer 218 tilts to an angle θ2 with respect to a normal line C perpendicular to the surface 209 of the substrate 210. Exemplarily but not restrictively, the angle θ2 is between 60∼85 degrees. Unless it is necessary, otherwise the decoration layer 218 does not have to be formed in the present embodiment so as to simplify manufacturing process.

Referring to FIG. 2D. In the above manufacturing process, a transparent ink 219 can be selectively formed in the opening 218a of the decoration layer 218 for the light with specific wavelength to penetrate through, wherein, the opening 203a in the semi-transparent region P0 corresponds to the opening 218a in the decoration layer 218. Suppose that such structure is a lack of the buffer layer 216 and the planarizing layer 217, the transparent ink 219 can be selectively formed in the first openings 230a. In an embodiment, the transparent ink 219 can be realized by an infra-red light ink, and an external light may pass through the infra-red light ink via the opening 203a. For example, the transparent ink 219 allows the light whose wavelength is within the range of infra-red light to pass through but blocks the light whose wavelength is within the range of visible light and UV-light. After the light passes through the transparent ink 219, the light is received by an infra-red light sensor (IR sensor).

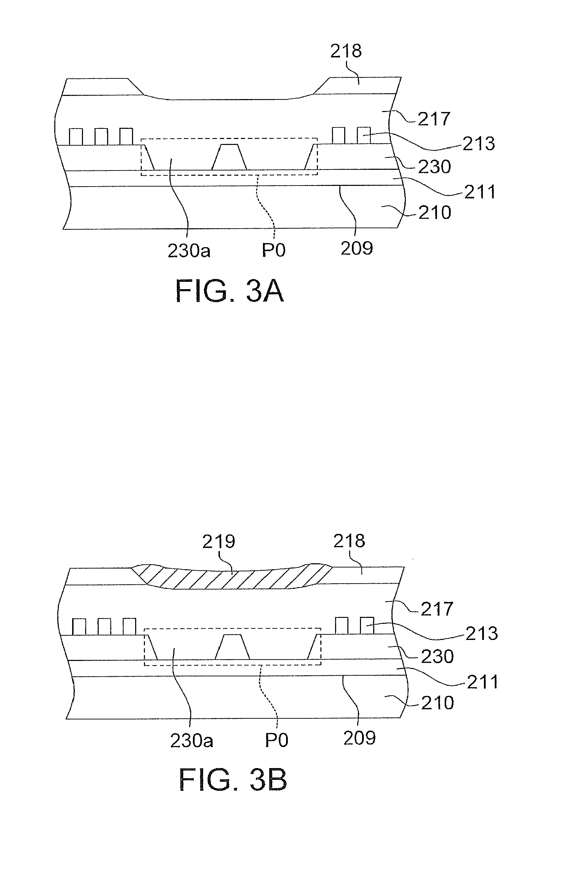

Referring to FIGS. 3A and 3B. The processes of the two embodiments illustrated in FIGS. 3A and 3B are similar to that of the above embodiment, and the same numeric designation indicates the same component. FIGS. 3A or 3B are different from the aforementioned embodiments is in that: if the problem of light transmittance is not considered, the planarizing layer 217 may be used to directly cover the semi-transparent region P0 and each opening 230a. Unlike the decoration layer 230 which blocks the light, the planarizing layer 217 of the present embodiment is still permeable to the light and is free of such problem that the light cannot enter the semi-transparent region P0. Selectively, the planarizing layer 217 may choose not to cover the openings 230a and allows a portion of the semi-transparent region P0 to be exposed to avoid the light transmittance of the opening 230a deteriorating.

In each of the above embodiments, the side wall SW1 of each opening 230a of the decoration layer 230 tilts to an angle θ1 with respect to a normal line C perpendicular to the surface 209 of the substrate 210. The angle θ1 is such as between 2∼40 degrees. The larger the tilt angle, the flatter the side wall SW1 of the opening; the smaller the tilt angle, the steeper the side wall SW1 of the opening. If the side wall SW1 of the opening does not tilt, then the opening is a cylindrical hole. If the side wall SW1 of the opening tilts inwardly, then the opening is a tapered hole which is wide at the bottom and narrow at the top. If the side wall SW1 of the opening tilts outwardly (FIG. 2A and 3A), then the opening is a tapered hole which is wide at the top and narrow at the bottom. Therefore, the effective area and the effective angle at which the light passes the semi-transparent region P0 can be changed by changing the shape of the openings 230a (the degree of inclination of the side wall SW1).

In an embodiment illustrated in FIGS. 3A and 3B, the planarizing layer 217 may be replaced with the buffer layer 216. Therefore, the second decoration layer 218 can be directly formed on the buffer layer 216.

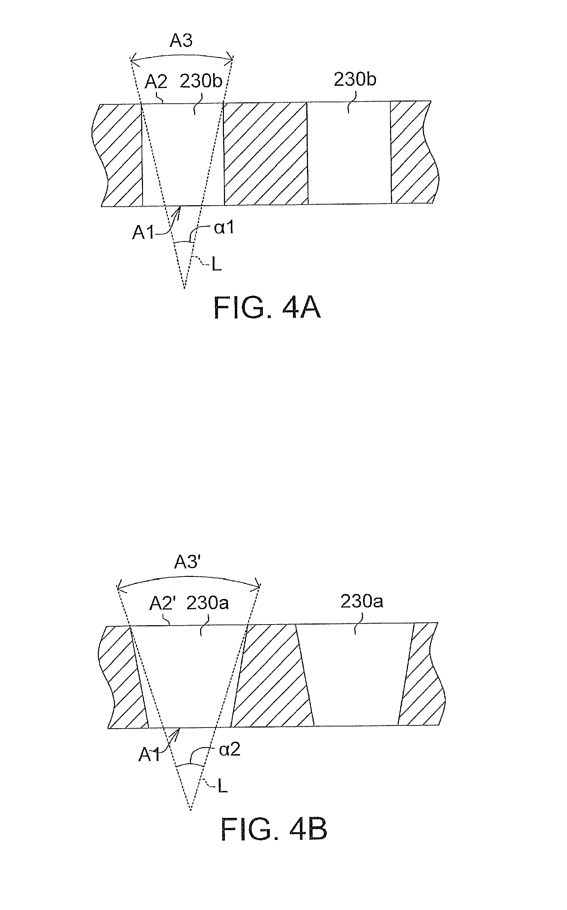

Referring to FIG. 4A and 4B, a comparison of the influence on the incident light and the outgoing light when the opening size is different are shown. In FIG. 4A, the opening 230b is cylindrical, and the opening area A1 of the light incoming/outgoing surface is equal to the opening area A2 of the light outgoing/incoming surface. When the light L passes through the opening 230b, the effective area A3 is equal to the opening area A2 of the light outgoing/incoming surface, and the effective angle α1 at which the light L passes is smaller. In FIG. 4B, the openings 230a are tapered holes, and the opening area A2' of the light outgoing/incoming surface is larger than the opening area A1 of the light incoming/outgoing surface. Meanwhile, the effective area A3' becomes larger when the light L passes through the openings 230a, that is, A3' larger than A3, and the effective angle α2 at which the light L passes also increases, that is, α2 larger than α1. Therefore, by increasing the effective area and the effective angle at which the light L passes the semi-transparent region P0, more oblique light L can be guided to pass through the semi-transparent region P0.

A number of embodiments are disclosed below for elaborating the invention. However, the embodiments of the invention are for detailed descriptions only, not for limiting the scope of protection of the invention.

### First Embodiment

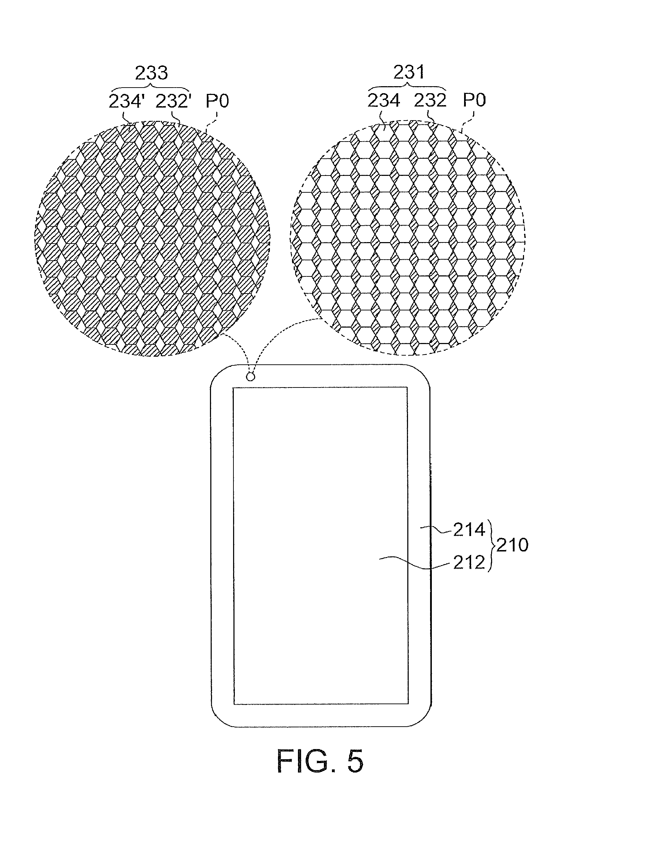

Referring to FIG. 5, a schematic diagram of a touch-sensitive panel having a semi-transparent region P0 in the decoration region 214 according to an embodiment of the invention is shown. The decoration region 214 of the substrate 210 is arranged at the peripheral of the touch-sensitive region 212, and a portion of the decoration region 214 forms a semi-transparent region P0. The transmittance of the light can be calculated according to the area ratio of the meshed pattern 231 or 233 in the semi-transparent region P0. In the present embodiment, the meshed pattern can be realized by (A) a meshed pattern 231 having a hexagonal opening region 234 and a diamond-shaped non-opening region 232 or (B) a meshed pattern 233 having a hexagonal non-opening region 234' and a diamond-shaped opening region 232'. However, the meshed pattern is not limited to the above exemplification, and can also be realized by a meshed pattern having opening region or non-opening region of other shapes.

In the present embodiment, the smaller the area ratio of the opening region in the semi-transparent region P0, the fewer flux of the light L may penetrate, and the smaller the light transmittance. Conversely, the larger the area ratio of the opening region in the semi-transparent region P0, the more flux of the light L may penetrate, and the larger the light transmittance. Thus, the opening area of the semi-transparent region P0 is basically proportional to the light transmittance of the light L.

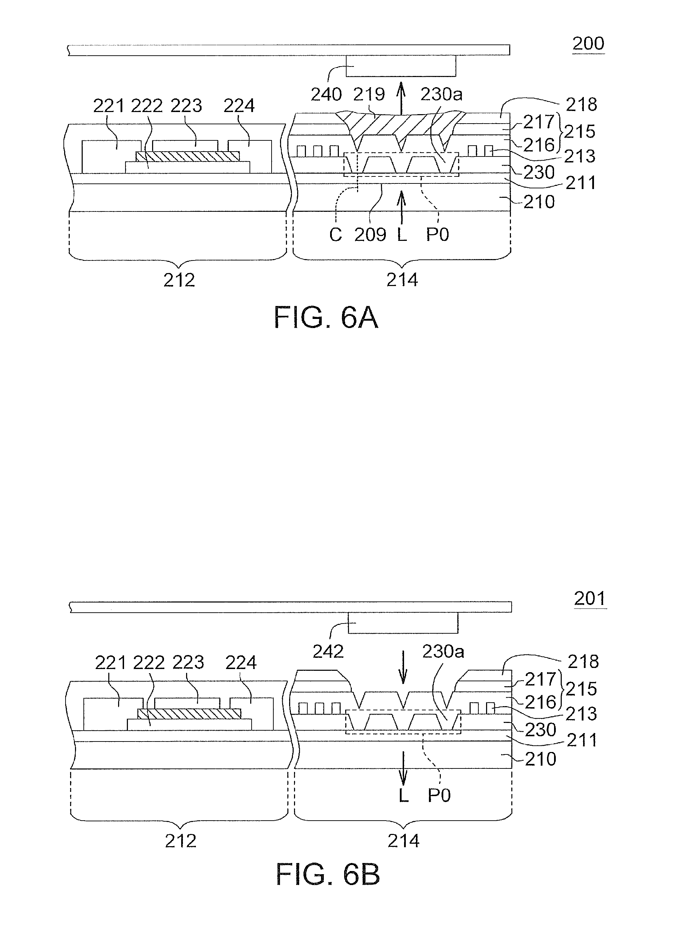

Referring to FIG. 6A, a cross-sectional view of a touch-sensitive panel 200 according to an embodiment of the invention is shown. The touch-sensitive panel 200 includes a substrate 210, a plurality of sensing electrodes 221∼224 and a decoration layer 230. The substrate 210 has a touch-sensitive region 212 and a decoration region 214. The sensing electrodes 221∼224 are disposed on the touch-sensitive region 212 for sensing the coordinate position corresponding to a touch signal. However, the sensing electrodes 221∼224 are not limited to the above exemplification, and can be selectively disposed on or extended to the decoration region 214, such that the decoration region 214 can have touch sensitive function. The decoration layer 230 is arranged at the peripheral of the touch-sensitive region 212, that is, on the decoration region 214. The decoration layer 230 has a meshed pattern 231 or 233 in the semi-transparent region P0 as indicated in FIG. 5.

The substrate 210 is a cover lens, which can be realized by a hard substrate or a flexible substrate respectively formed by glass or plastics. The decoration layer 230 is formed by a non-transparent bottom shade, more commonly, such as a colored photo-resist. The openings 230a may be formed in the meshed pattern 231 by way of wet etching (exposure and development) or dry etching (laseretching), for example, and only one mask would suffice to achieve semi-transparent visual effect or gradient effect. Besides, the side wall SW1 of the opening tilts to an angle with respect to a normal line C perpendicular to the substrate surface 209 for guiding more oblique light to enter the semi-transparent region P0.

In FIG. 6A, the touch-sensitive panel 200 further includes a photo-sensor 240 located at the rear of the semi-transparent region P0 for detecting the luminous flux entering the semi-transparent region P0. For example, there will be more luminous flux of the light entering the semi-transparent region P0 at sunny places and fewer luminous flux of the light entering the semi-transparent region P0 at gloomy places. Thus, the present embodiment of the invention may adjust the brightness of the touch screen with the luminous flux measured by the photo-sensor 240, hence avoiding the influence of sunshine on the touch screen. The photo-sensor 240 may be a photo-sensor for sensing an infra-red light or a photo-sensor for sensing a visible light. In an embodiment, the photo-sensor for sensing infra-red light can be used together with a special transparent ink 219 for detecting the luminous flux of an infra-red light.

### Second Embodiment

Referring to FIG. 6B, a cross-sectional view of a touch-sensitive panel 201 according to an embodiment of the invention is shown. The second embodiment is different from the first embodiment in that the touch-sensitive panel 201 further includes a photo-emitter 242 located at the rear of the semi-transparent region P0. The photo-emitter 242 can be realized by a light emitting diode, an organic light emitting diode or a phosphor which glimmers when the photo-emitter 242 is excited. Besides, the opening area of the semi-transparent region P0 also affects the luminous flux of the photo-emitter 242. When the opening area is increased, more flux of the light can penetrate the opening. When the opening area is decreased, fewer flux of the light can penetrate the opening. In addition, the openings 230a in the semi-transparent region P0 affect the dynamic state of the light. For example, when the light L generated by the photo-emitter 242 passes through the semi-transparent region P0, the optical path difference can be generated through the interference of the openings 230a, and the light beams of different optical path differences overlap one another to form a diffractive pattern. Therefore, by adjusting the distribution and size of the openings 230a, the human eyes will have visual change with regard to the optical effect induced by the semi-transparent region P0.

### Third Embodiment

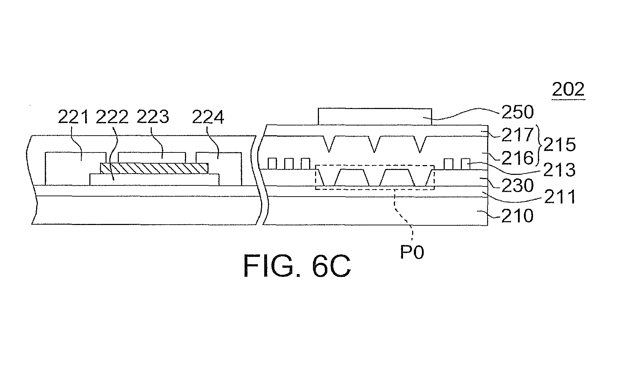

Referring to FIG. 6C, a touch-sensitive panel 202 according to an embodiment of the invention is shown. The touch-sensitive panel 202 includes a protection layer 215, which covers the semi-transparent region P0 and is formed on each opening 230a. The protection layer 215 can be selectively formed by the buffer layer 216 and/or the planarizing layer 217 which are formed by silicon dioxide, silicon nitride, organic insulating material and/or inorganic insulating material. If the structure of the protection layer 215 has more than two layers, the positions of the layers are exchangeable. The present embodiment is different from the first and the second embodiment in that the touch-sensitive panel 202 further includes a colored ink 250 disposed on the protection layer 215. The colored ink 250 is located at the rear of the semi-transparent region P0 for reflecting the light L entering via the semi-transparent region P0. The colored ink 250 is not limited to any specific color, and is preferably different from the bottom shade, that is, the color of the decoration layer 230, such that the color displayed in the semi-transparent region P0 is different from the color of the decoration layer 230. The colored ink 250 can have one color, two colors, or three colors or can have gradient effect, such that the colored ink 250 cannot produce a stereoscopic effect when irradiated by the light L. Through printing, the colored ink 250 can produce various forms of pattern, such as texts, trademark or company names, to highlight the texture and uniqueness. Therefore, the meshed patterns having different light transmittance make the colored ink 250 able to produce a stereoscopic effect according to an embodiment when irradiated by the light L.

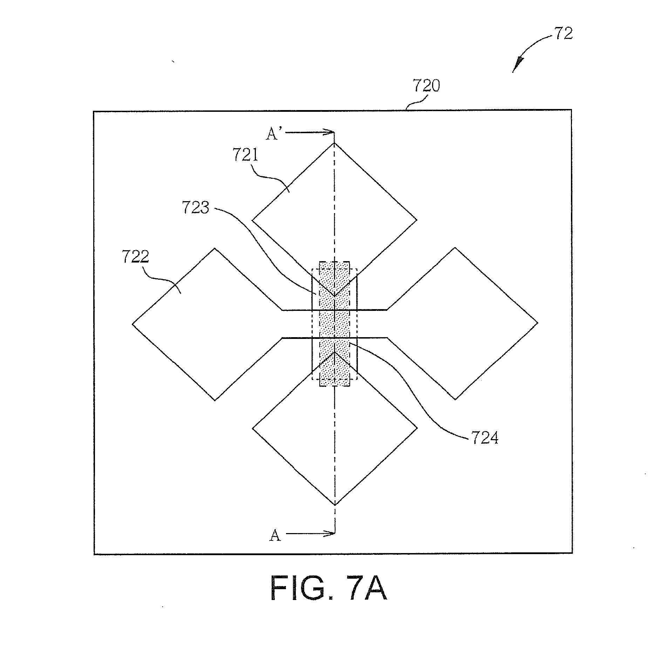

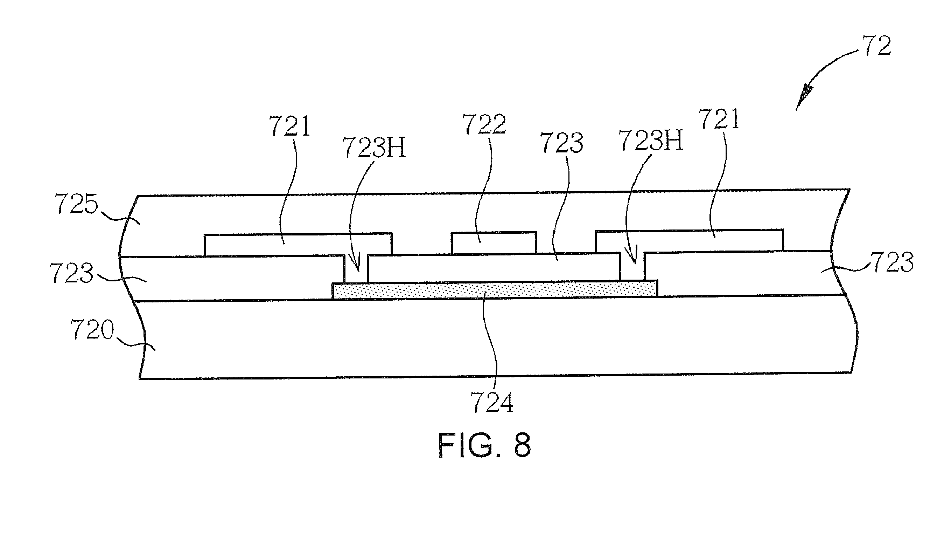

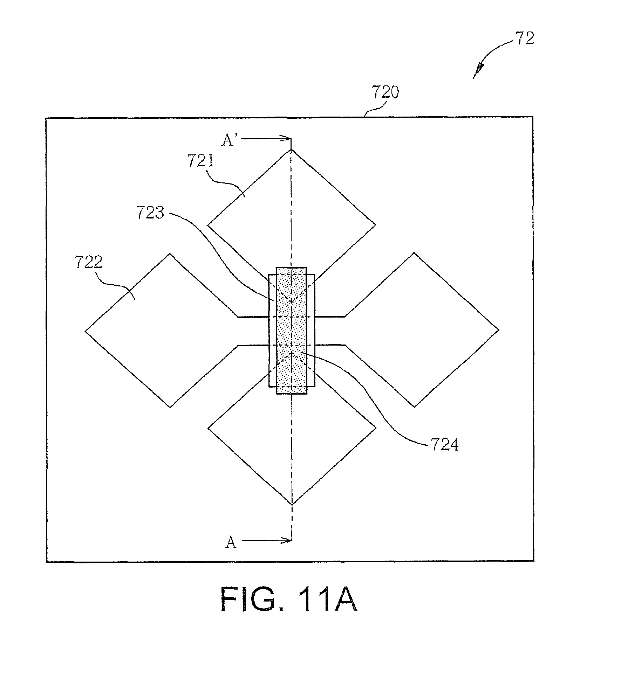

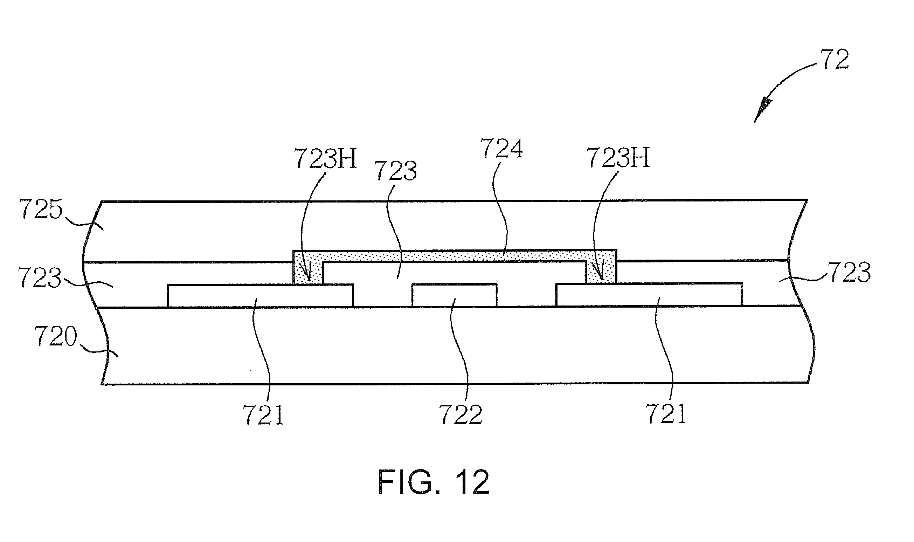

The types of the sensing electrodes 221∼224 are disclosed in the descriptions of FIG. 7A∼7B, FIGS 8∼10, FIGS. 11A∼11B and FIG. 12.

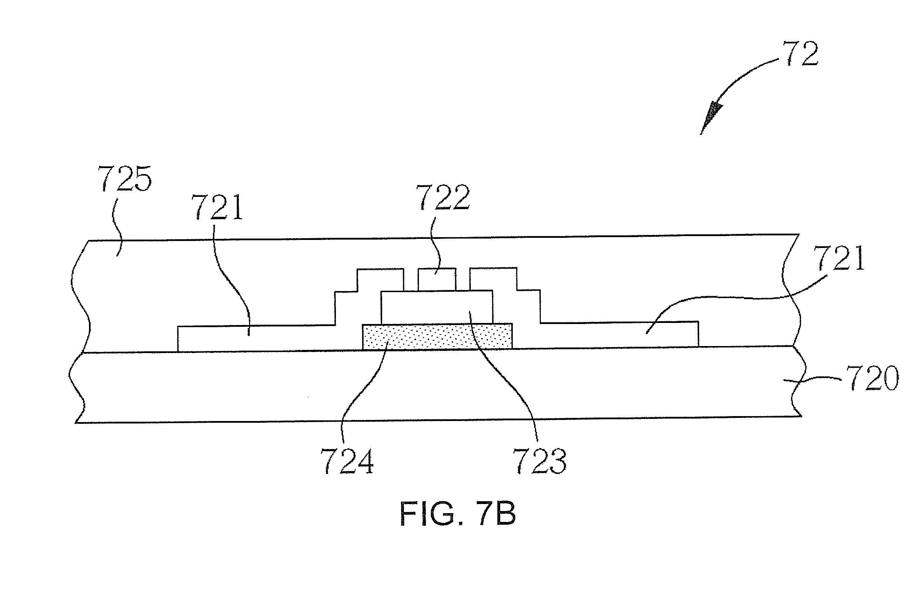

Referring to FIG. 7A and FIG. 7B. FIG. 7A shows a top view of a touch sensing element disposed on the touch-sensitive region according to FIG. 5. FIG. 7B shows a cross-sectional view of a touch sensing element along a cross-sectional line A-A' according to FIG. 7A. In the present embodiment, the touch sensing element is such as a capacitive touch sensing element 72 including a substrate 720, a bridge wire 724, an insulating layer 723, a plurality of first electrodes 721 and a plurality of second electrodes 722. The bridge wire 724 is disposed on the substrate 720. The insulating layer 723 covers the bridge wire 724 and exposes two ends of the bridge wire 724 and a portion of the substrate 720. The first electrodes 721 are located on the substrate 720 and are electrically connected to the two exposed ends of the bridge wire 724. The second electrodes 722 are located on the insulating layer 723, and two adjacent second electrodes 722 can be directly connected, but the invention is not limited thereto. Besides, the first electrodes 721, the second electrodes 722, the insulating layer 723 and the bridge wire 724 can further have a protection layer 725 disposed thereon. In the present embodiment, the bridge wire 724 can be single-layered and can be realized by such as a metal bridge wire or a transparent conductive bridge wire formed by such as indium tin oxide (ITO), or a composite layer formed by stacking a metal material and a transparent conductive material together. The first electrodes 721 and the second electrodes 722 can be formed by the same transparent conductive material and patterned by the same manufacturing process.

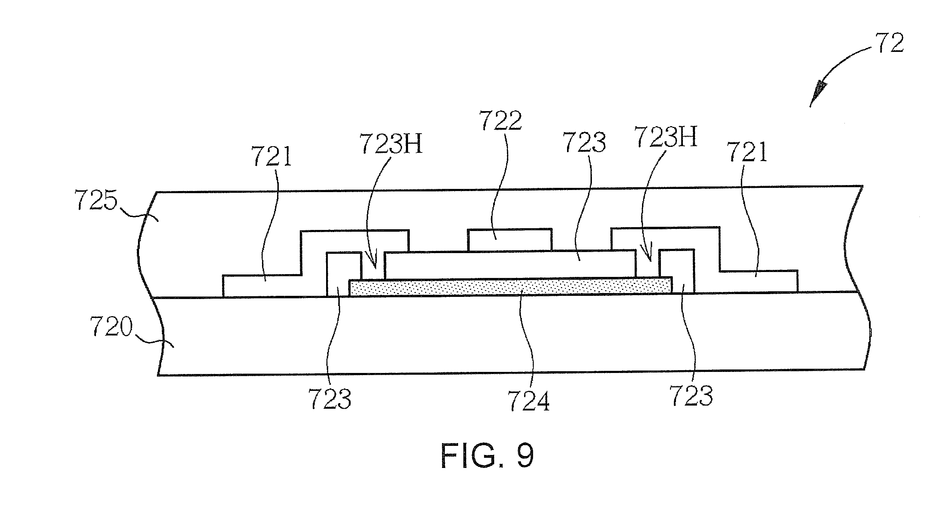

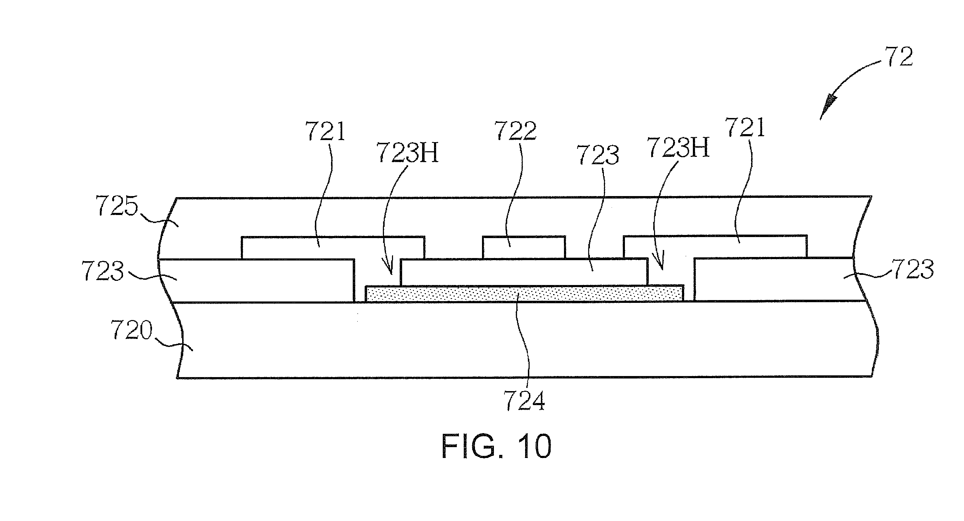

Referring to FIGS. 8∼10, three variations of the touch sensing element according to FIG. 7A and FIG. 7B are shown. The embodiments of three variations of FIGS. 8∼10 are similar to the embodiments illustrated in FIG. 7A and FIG. 7B except that in the three variations, the first electrodes 721 are electrically connected to the bridge wire 724 through the touch hole 723H of the insulating layer 723, and the touch hole 723H may expose only the bridge wire 724 (FIG. 8 and FIG. 9), or the bridge wire 724 and a portion of the substrate 720 (FIG. 10). In addition, the insulating layer 723 may completely cover the substrate 720 (FIG. 8), or only cover a portion of the substrate 720 (FIG. 9).

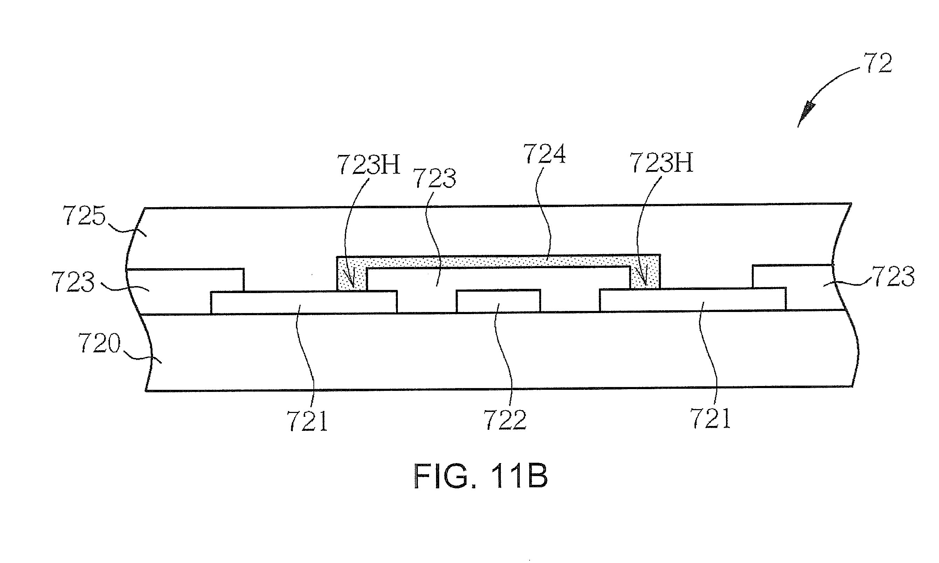

Referring to FIG. 11A and FIG. 11B. FIG. 11A shows a top view of a touch sensing element disposed on the touch-sensitive region of FIG. 5. FIG. 11B shows a cross-sectional view of a touch sensing element along a cross-sectional line A-A' of FIG. 11A. In the present embodiment, the touch sensing element is such as a capacitive touch sensing element 72 including a substrate 720, a plurality of first electrodes 721, a plurality of second electrodes 722, an insulating layer 723 and a bridge wire 724. In the present embodiment, the first electrodes 721 and the second electrodes 722 can be formed by the same transparent conductive material and disposed on the substrate 720, and the insulating layer 723 covers the substrate 720, the first electrodes 721 and the second electrodes 722 and partially exposes the first electrodes 721. The bridge wire 724 is disposed on the insulating layer 723 and is electrically connected to a portion of the exposed neighboring first electrodes 721 in the contact hole 723H, and is directly connected to the neighboring second electrodes 722, but the invention is not limited thereto. Moreover, the insulating layer 723 and the bridge wire 724 can further have a protection layer 725 disposed thereon.

Referring to FIG. 12, a variation of a touch sensing element of a touch panel according to FIG. 11A and FIG. 11B is shown. The variation embodiment illustrated in FIG. 12 is similar to the embodiment illustrated in FIG. 11A and FIG. 11B but is different in that in the variation embodiment, the bridge wire 724 is completely interposed to the contact hole 723H of the insulating layer 723 to be electrically connected to the first electrodes 721.

The structure of the touch sensing element of the invention is not limited to the above embodiments. For example, the first electrodes 721 and the second electrodes 722 may be formed by different conductive materials. Under such circumstances, the first electrodes 721 can be directly connected without the bridge wire 724.

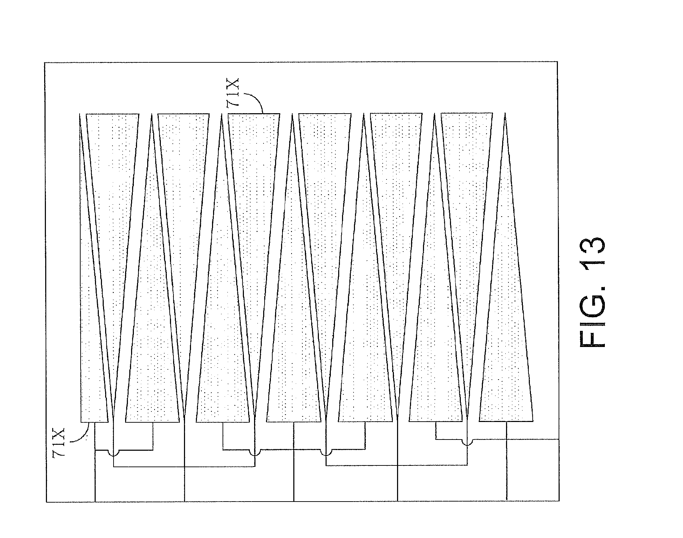

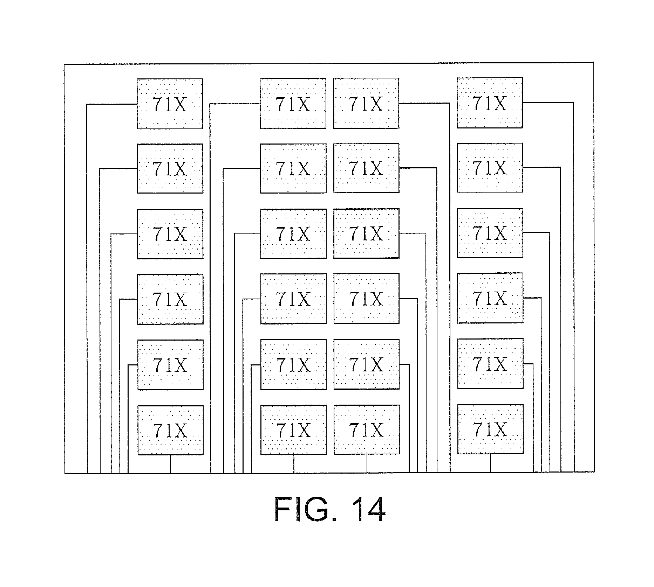

Although the embodiments and variations of the above electrodes are exemplified by the first electrodes and the second electrodes, the invention is not limited to the above exemplification. The electrodes of the invention can be realized by any types of single-layered electrode, such as a plurality of electrodes 71 X arranged in a triangle (FIG. 13) or a plurality of electrodes 71 X arranged in a matrix (FIG. 14). Moreover, the electrodes 71 X can have the same conductive pattern or different conductive patterns.

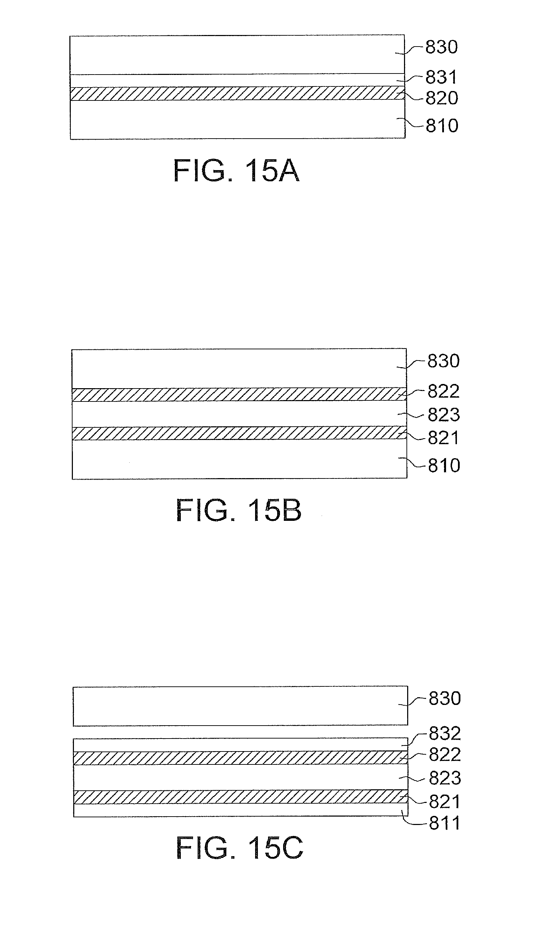

The types of the touch-sensitive panel are described below. The touch-sensitive panel of the present embodiment can be realized by a resistive touch-sensitive panel or other types of touch-sensitive panel, and the touch sensing element can be manufactured according to a number of embodiments below. Referring to FIG. 15A. The electrodes of the touch sensing element 820 can have a single-layered structure or a double-layered structure, and can be formed on a glass substrate 810 such as the glass substrate of a display panel, and then are coupled to a glass cover 830 through an adhesion layer 831. The adhesion layer 831 may be a liquid optical clear adhesive (LOCA), a pressure-sensitive adhesive (PSA) or other varieties of adhesive glue. The adhesion layer 831 can be completely coated between the glass substrate 810 and the glass cover 830, or merely coated on the peripheral of the glass substrate 810 and the glass cover 830.

Referring to another embodiment illustrated in FIG. 15B. When the electrodes of the touch sensing element 820 are divided into two layers, the first electrode layer 821 can be formed on a glass substrate 810 such as the glass substrate of a display panel and the second electrode layer 822 can be formed on a glass cover 830. The first electrode layer 821 and the second electrode layer 822 can be bonded together through an adhesion layer 823 which may be a liquid optical clear adhesive (LOCA), a pressure-sensitive adhesive (PSA) or other varieties of adhesive glue.

Referring to another embodiment illustrated in FIG. 15C. When the electrodes of the touch sensing element 820 are divided into two layers, the first electrode layer 821 can be formed on a first flexible substrate 811 such as an organic compound film and the second electrode layer 822 can be formed on a second flexible substrate 832. The first electrode layer 821 and the second electrode layer 822 can be bonded together through an adhesion layer 823 which may be a liquid optical clear adhesive (LOCA), a pressure-sensitive adhesive (PSA) or other varieties of adhesive glue.

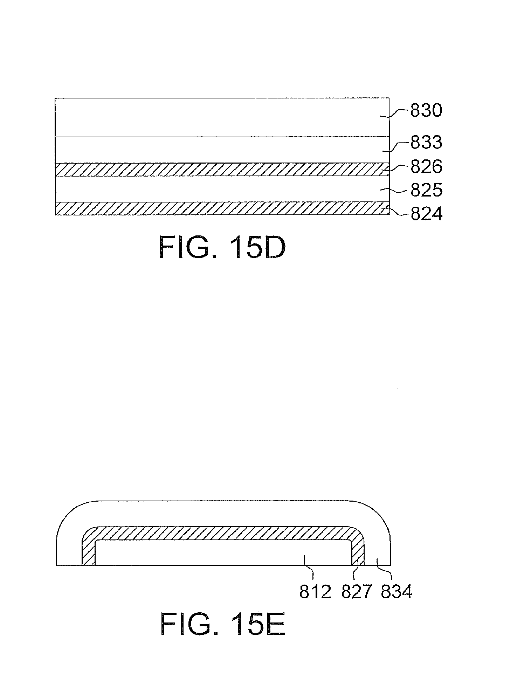

Referring to another embodiment illustrated in FIG. 15D. When the electrodes of the touch sensing element 820 are divided into two layers, the first electrode layer 824 and the second electrode layer 826 can respectively be formed on two opposite surfaces of a hard substrate 825 formed by glass, plastics and so on. Then, the hard substrate 825 and the glass cover 830 can be bonded together through an adhesion layer 833 which may be a liquid optical clear adhesive (LOCA), a pressure-sensitive adhesive (PSA) or other varieties of adhesive glue.

Referring to another embodiment illustrated in FIG. 15E. When the electrodes of the touch sensing element 827 are single-layered, the electrodes can be formed on a flexible substrate 812 such as an organic compound film. The flexible substrate 812 and the plastic cover 834 can be integrated as an embedded touch structure.

While the invention has been described by way of example and in terms of the preferred embodiments, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A touch-sensitive panel, comprising:
a substrate having a touch-sensitive region and a decoration region arranged at the peripheral of the touch-sensitive region, wherein a portion of the decoration region is a semi-transparent region;
a plurality of sensing electrodes disposed on the touch-sensitive region; and
a first decoration layer disposed on the decoration region and having a meshed pattern in the semi-transparent region, wherein the meshed pattern has a plurality of first openings, a side wall of each first opening tilts with respect to a normal line perpendicular to a surface of the substrate to regulate a light transmittance of the light entering or emitted from the semi-transparent region.

2. The touch-sensitive panel according to claim 1, wherein the first openings are tapered holes.

3. The touch-sensitive panel according to claim 1, further comprising a photo-sensor located at a rear of the semi-transparent region for sensing a luminous flux of the light entering the semi-transparent region.

4. The touch-sensitive panel according to claim 1, further comprising a photo-emitter located at a rear of the semi-transparent region for generating a light which enters the semi-transparent region and then is emitted from the semi-transparent region.

5. The touch-sensitive panel according to claim 1, further comprising an insulating layer formed on the substrate, and the decoration layer is formed on the insulating layer.

6. The touch-sensitive panel according to claim 1, wherein a maximum aperture of each first opening of the first decoration layer is not larger than 120um, or, the maximum aperture of each first opening is larger than 120um.

7. The touch-sensitive panel according to claim 1, wherein the side wall of each first opening of the first decoration layer tilts to an angle with respect to the normal line perpendicular to the surface of the substrate, and the angle is between 2∼40 degrees.

8. The touch-sensitive panel according to claim 1, further comprising a plurality of wires and a protection layer, the wires are arranged on the decoration layer, and the protection layer covers the wires and the decoration layer.

9. The touch-sensitive panel according to claim 8, wherein the protection layer comprises a buffer layer and a planarizing layer, the buffer layer covers the first openings in the semi-transparent region, and the planarizing layer covers the buffer layer and exposes a portion of the buffer layer corresponding to the semi-transparent region.

10. The touch-sensitive panel according to claim 1, further comprising a protection layer, being a planarizing layer, which covers the first openings in the semi-transparent region, or not covers the first openings in the semi-transparent region.

11. The touch-sensitive panel according to claim 1, further comprising a protection layer, being a buffer layer, which covers the first openings in the semi-transparent region.

12. The touch-sensitive panel according to claim 9, further comprising a second decoration layer formed on the planarizing layer, the second decoration layer has a second opening corresponding to the first openings in the semi-transparent region, a side wall of the second opening tilts to an second angle with respect to a normal line perpendicular to the surface of the substrate, and the second angle is between 60∼85 degrees.

13. The touch-sensitive panel according to claim 10, further comprising a second decoration layer formed on the planarizing layer, the second decoration layer has a second opening corresponding to the first openings in the semi-transparent region, a side wall of the second opening tilts to an second angle with respect to the normal line perpendicular to the surface of the substrate, and the second angle is between 60∼85 degrees.

14. The touch-sensitive panel according to claim 11, further comprising a second decoration layer formed on the buffer layer, the second decoration layer has a second opening corresponding to the first openings in the semi-transparent region, a side wall of the second opening tilts to a second angle with respect to the normal line perpendicular to the surface of the substrate, and the second angle is between 60∼85 degrees.

15. The touch-sensitive panel according to claim 1, further comprising a transparent ink formed in the first openings.

16. The touch-sensitive panel according to claim 12, further comprising a transparent ink formed in the second opening.

17. The touch-sensitive panel according to claim 8, further comprising a colored ink disposed on the protection layer and located at a rear of the colored ink for reflecting the light entering via the semi-transparent region.

18. The touch-sensitive panel according to claim 1, wherein the meshed pattern comprises a hexagonal opening region and a diamond-shaped non-opening region.

19. The touch-sensitive panel according to claim 1, wherein the meshed pattern comprises a hexagonal non-opening region and a diamond-shaped opening region.

20. The touch-sensitive panel according to claim 1, wherein the substrate is formed by glass or plastics.
